# EUROPEAN PATENT APPLICATION

(11) **EP 4 528 159 A1**
(43) Date of publication of application: **26.03.2025**
(21) Application number: 23199339.5
(22) Date of filing: 25.09.2023
(51) Int. Cl.: F23D 14/64, F23D 14/28, F23D 14/04, A47J 36/26, A47J 36/30, F24C 3/14

(54) **GAS ADJUSTING DEVICE AND COMBUSTION ASSEMBLY**

(71) Applicant: Grand Mate Co., Ltd., Taichung City 401 (TW)
(72) Inventor: HUANG, Chin-Ying, 401 Taichung City (TW); HUANG, Hsin-Ming, 401 Taichung City (TW); HUANG, Hsing-Hsiung, 401 Taichung City (TW); YEH, Yen-Jen, 412 Taichung City (TW)
(74) Representative: Viering, Jentschura & Partner mbB Patent- und Rechtsanwälte

(57) **Abstract**

A combustion assembly (100) includes a gas adjusting device (10), a mixing pipe (20), and a burner (30). The gas adjusting device (10) includes a nozzle (14), a connecting base (16), an ignition unit (18) disposed in the connecting base (16), and a gas adjusting valve (12) including a valve body (13) for being detachably connected to a gas tank (2), an adjusting member (122) located in a gas passage (136) of the valve body (13), and a knob (124) connected to the adjusting member (122) and for adjusting a gas flow. The connecting base (16) is connected between the valve body (13) and the burner (30) and has a mixing chamber (176) and an inlet (176b) located on a side of the nozzle (14). The nozzle (14) extends into the mixing chamber (176) and is disposed on the valve body (13). An ignition electrode (184) of the ignition unit (18) extends next to the burner (30).

## Description

### BACKGROUND OF THE INVENTION

### Technical Field

The present invention relates generally to a gas burner, and more particularly to a gas adjusting device and a combustion assembly.

### Description of Related Art

In recent years, outdoor camping is popular in the public and provides an opportunity to people to enjoy the natural environment, and outdoor gas stoves are one of the most important tools in outdoor camping. It is well known that a conventional outdoor gas stove includes a gas tank, a gas hose, an ignitor, and a burner, wherein the burner is connected to the gas tank through the gas hose; a gas is introduced by the gas hose and ignition is performed by the ignitor, so that the burner burns.

However, the gas hose is easily deformable and is hard to be fixed; when the gas hose is too long, a user may accidentally pull the gas hose and the gas tank or the burner is accordingly pulled, so that the gas tank or the burner is damaged or fire accident is caused when the gas tank or the burner falls. The gas hose is not stiff and strong, and damage and wear and tear are easily resulted due to the long-term use. As a result, the gas inside the gas tank may be leaked outward through the damaged gas hose.

Therefore, the conventional way of connecting the gas tank to the burner by using the gas hose still has room for improvement.

### BRIEF SUMMARY OF THE INVENTION

In view of the above, the primary objective of the present invention is to provide a gas adjusting device and a combustion assembly, wherein both the gas adjusting device and the combustion assembly could be modularly formed.

The present invention provides a gas adjusting device adapted to be connected to a burner and a gas tank. The gas adjusting device includes a gas adjusting valve, a nozzle, a connecting base, and an ignition unit. The gas adjusting valve includes a valve body, an adjusting member, and a knob, wherein the valve body has a gas connecting portion and a first connecting portion. The gas connecting portion is adapted to be detachably connected to the gas tank. An inner portion of the valve body has a gas passage. The gas passage has an entrance and an exit, wherein the entrance is formed in the gas connecting portion, and the exit is formed in the first connecting portion. The adjusting member is located in the gas passage. The knob is connected to the adjusting member and is adapted to drive the adjusting member to adjust a gas flow passing though the gas passage. The nozzle is disposed on the valve body and is located at the exit. The connecting base includes a casing, wherein the casing has a first end and a second end that are opposite to each other. The first end has a second connecting portion, wherein the second connecting portion is connected to the first connecting portion. The casing has a mixing chamber, a through hole, at least one inlet, and an outlet that respectively communicate with the mixing chamber, wherein the through hole is located on the first end and the nozzle extends into the mixing chamber through the through hole. The at least one inlet is located between the first end and the second end and is located on a side of the nozzle. The outlet is located on the second end and is adapted to communicate with the burner. The ignition unit is disposed in the casing and includes a high-voltage ignitor, an ignition electrode, and a button, wherein the high-voltage ignitor is located in the mixing chamber. The ignition electrode is electrically connected to the high-voltage ignitor and extends out of the second end of the casing. The button is connected to the high-voltage ignitor and is adapted to activate the high-voltage ignitor.

The present invention further provides a combustion assembly adapted to be disposed on a top of an oven body of an oven. The combustion assembly includes the aforementioned gas adjusting device, a mixing pipe, and a burner. The mixing pipe has two ends, wherein one of the two end of the mixing pipe is connected to the second end of the casing and is located at the outlet. The burner communicates with the other end of the mixing pipe.

With the aforementioned design, the gas adjusting device has a modularized structure and could be connected to the burner and the gas tank, and the combustion assembly also has a modularized structure, so that the drawbacks of connecting the gas tank and the burner by using the gas hose could be resolved. Additionally, the inlet could introduce oxidizing air to improve the combustion efficiency.

### BRIEF DESCRIPTION OF THE SEVERAL VIEWS OF THE DRAWINGS

The present invention will be best understood by referring to the following detailed description of some illustrative embodiments in conjunction with the accompanying drawings, in which
FIG. 1 is a perspective view of the combustion assembly and the oven in which the combustion assembly is used according to an embodiment of the present invention;
FIG. 2 is an exploded view of the combustion assembly and the oven in which the combustion assembly is used according to the embodiment of the present invention;
FIG. 3 is a perspective view of the combustion assembly according to the embodiment of the present invention;
FIG. 4 is an exploded view of the combustion assembly according to the embodiment of the present invention;
FIG. 5 is an exploded view of the combustion assembly according to the embodiment of the present invention seen from another direction;
FIG. 6 is a perspective view of the gas adjusting valve according to the embodiment of the present invention;
FIG. 7 is a perspective view of the connecting base and the ignition unit according to the embodiment of the present invention;
FIG. 8 is an exploded view of the connecting base and the ignition unit according to the embodiment of the present invention;
FIG. 9 is an exploded view of the connecting base and the ignition unit according to the embodiment of the present invention seen from another direction;
FIG. 10 is a bottom view of the combustion assembly according to the embodiment of the present invention;
FIG. 11 is a top view of the combustion assembly according to the embodiment of the present invention;
FIG. 12 is a sectional view along the 12-12 line in FIG. 11; and
FIG. 13 is a sectional view along the 13-13 line in FIG. 11.

### DETAILED DESCRIPTION OF THE INVENTION

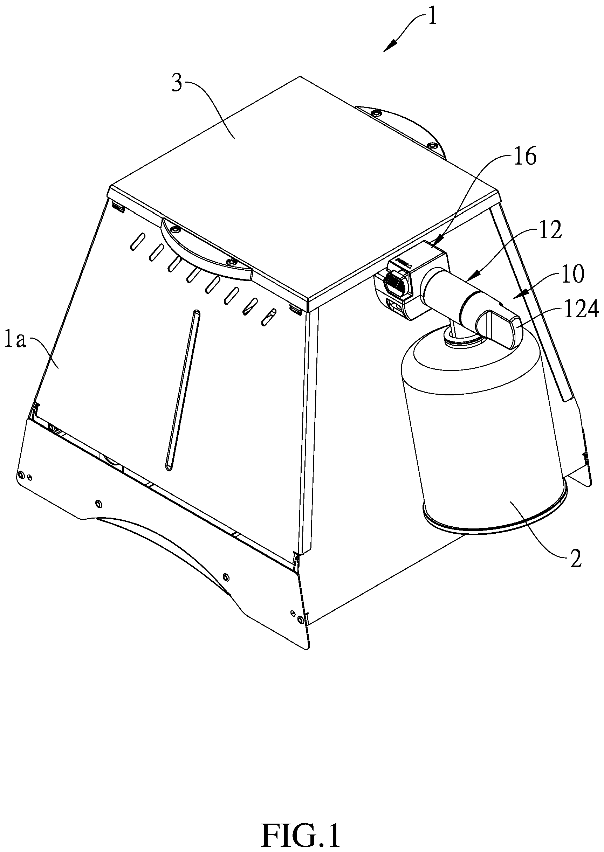

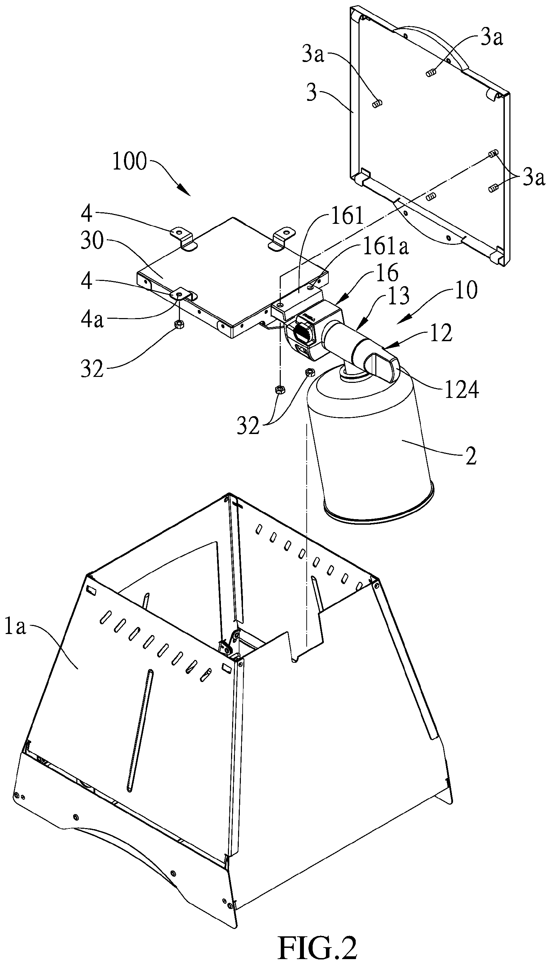

A combustion assembly 100 and an oven 1, in which the combustion assembly 100 is used, are illustrated in FIG. 1 and FIG. 2. The combustion assembly 100 is disposed on a top of an oven body 1a of the oven 1 and includes a gas adjusting device 10, a mixing pipe 20, and a burner 30.

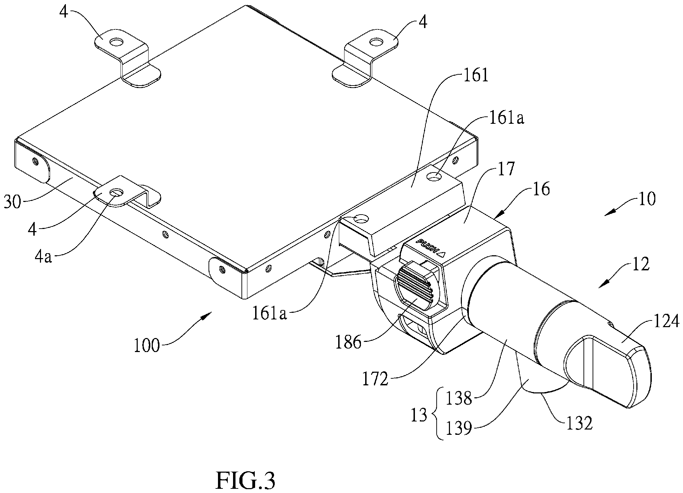

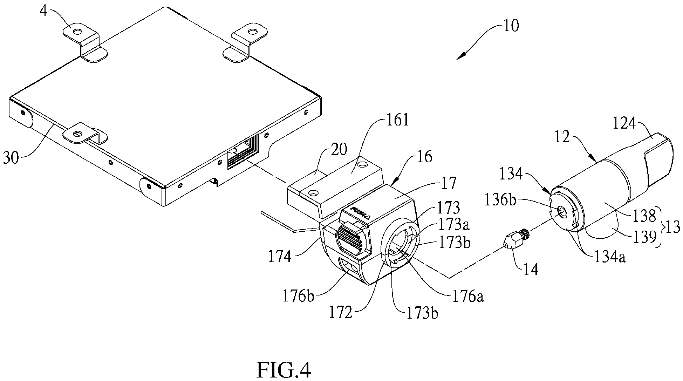

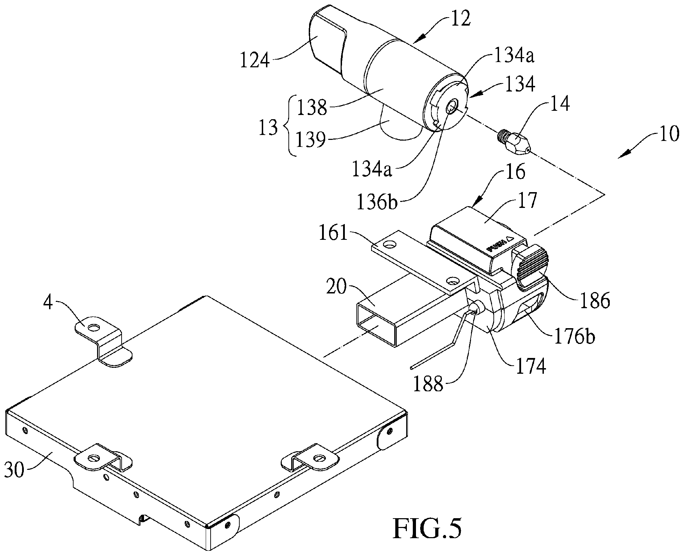

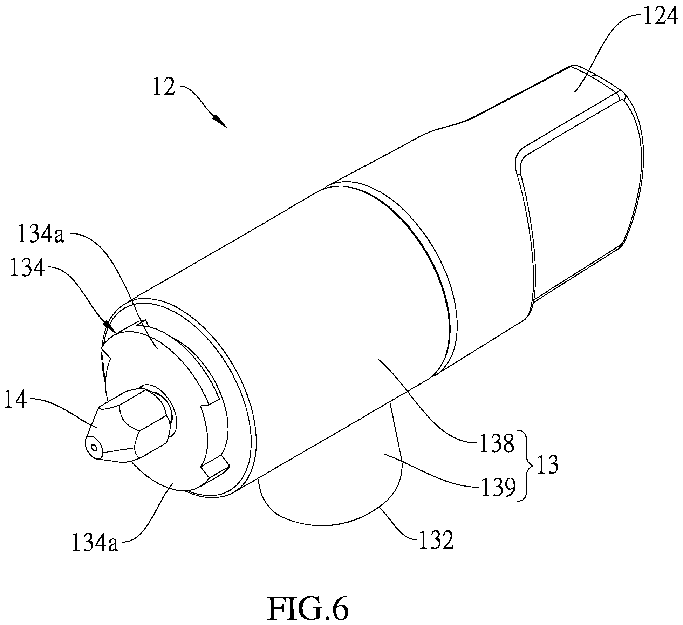

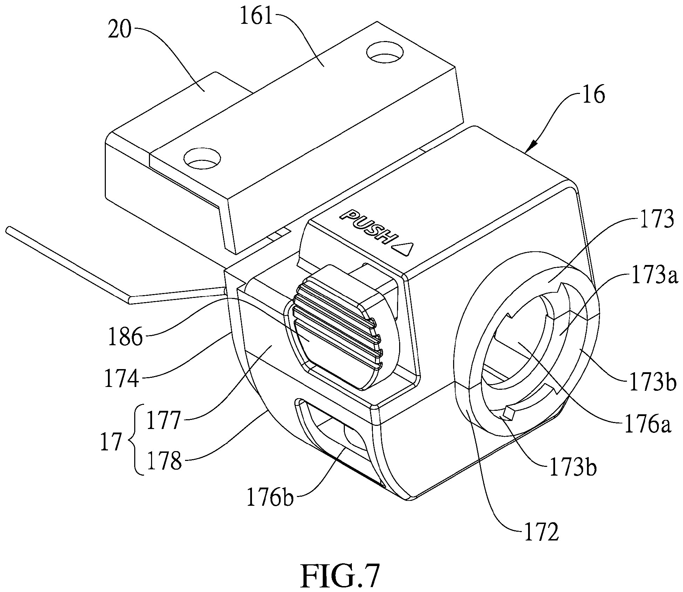

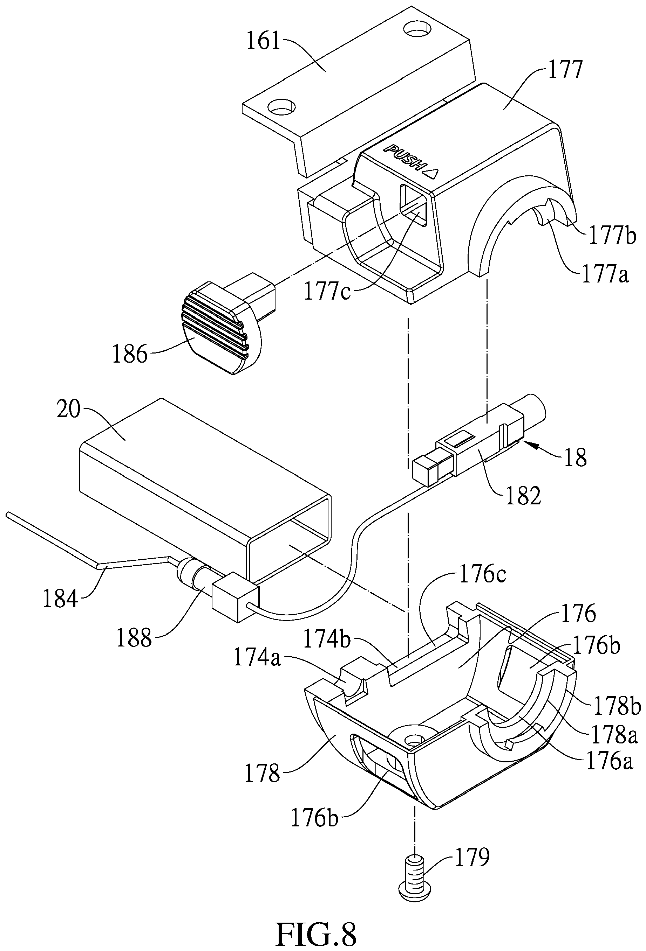

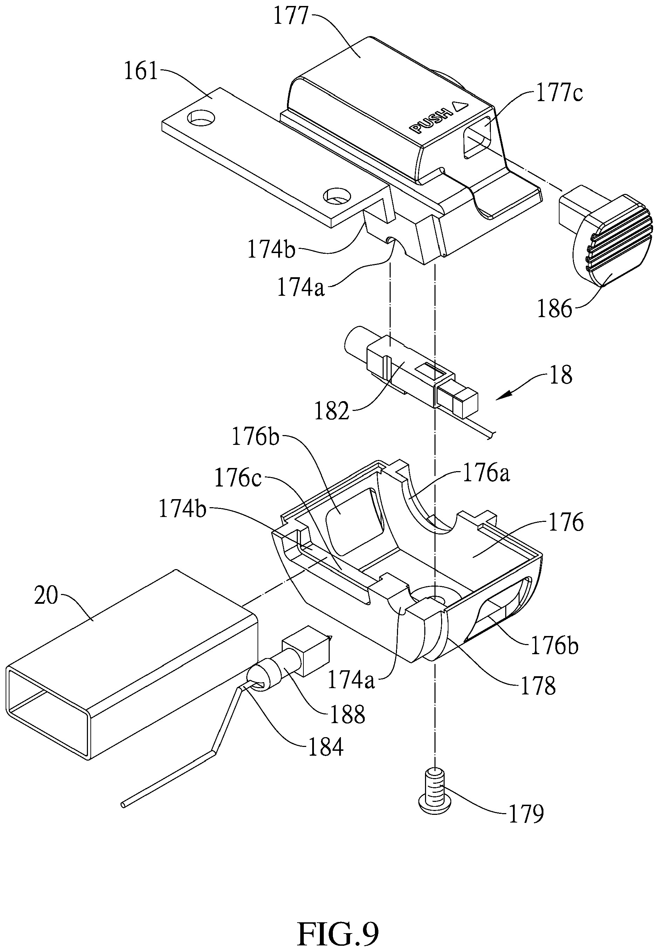

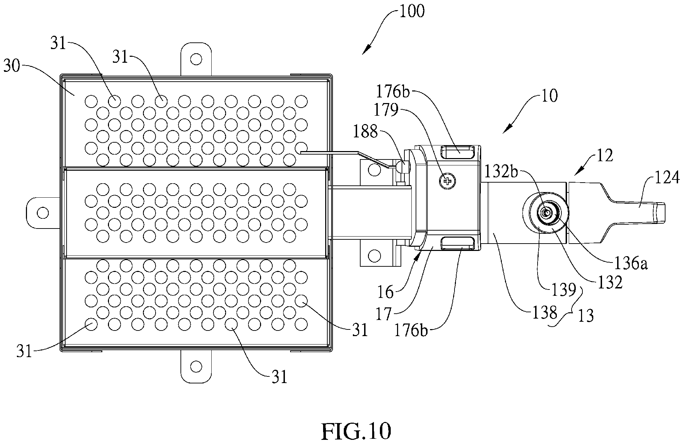

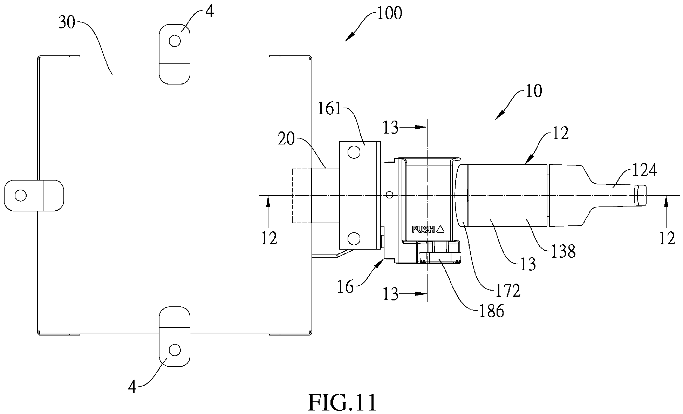

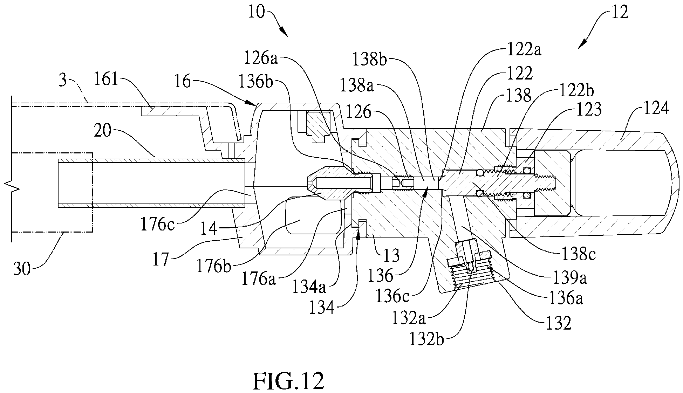

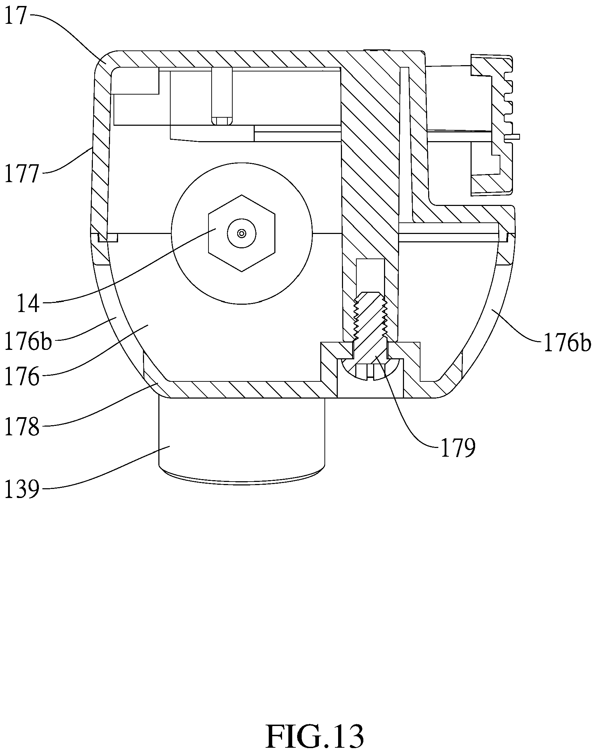

As shown in FIG. 3 to FIG. 13, the gas adjusting device 10 is adapted to be connected to a gas tank 2 to adjust a gas flow outputted by the gas tank 2. The gas adjusting device 10 includes a gas adjusting valve 12, a nozzle 14, a connecting base 16, and an ignition unit 18.

The gas adjusting valve 12 includes a valve body 13, an adjusting member 122, and a knob 124. The valve body 13 has a gas connecting portion 132 and a first connecting portion 134, wherein the gas connecting portion 132 is adapted to be detachably connected to the gas tank 2. An inner portion of the valve body 13 has a gas passage 136, wherein the gas passage 136 has an entrance 136a and an exit 136b. In the current embodiment, the valve body 13 has a main body 138 and a side connecting portion 139; the main body 138 is a cylinder and has two opposite ends on an axial direction of the main body 138, wherein one of the two ends of the main body 138 constitutes the first connecting portion 134; the main body 138 has an axial hole 138a along the axial direction of the main body 138; the axial hole 138a has a first section 138b and a second section 138c, wherein the first section 138b communicates with the first connecting portion 134, and the adjusting member 122 is disposed in the second section 138c; the side connecting portion 139 is connected to a side of the main body 138 and has the gas connecting portion 132; an inner portion of the side connecting portion 139 has a side hole 139a communicating with the axial hole 138a; an axial direction of the side hole 139a and an axial direction of the axial hole 138a intersect, wherein an angle between the axial direction of the side hole 139a and the axial direction of the axial hole 138a ranges between 70 degrees and 80 degrees; The gas passage 136 is formed between the side hole 139a and the first section 138b of the axial hole 138a; the entrance 136a of the gas passage 136 is formed in the gas connecting portion 132, and the exit 136b of the gas passage 136 is formed in the first connecting portion 134.

The first connecting portion 134 has a plurality of positioning members 134a extending along a radial direction of the first connecting portion 134 and arranged around the exit 136b of the gas passage 136. In the current embodiment, the number of the positioning member 134a is two, wherein the two positioning members 134a are located to face each other, and the exit 136b is located between the two positioning members 134a. The gas passage 136 has a valve opening 136c located at a junction between the first section 138b and the second section 138c. The gas connecting portion 132 has a threaded surface 132a therein, wherein the threaded surface 132a is adapted to be detachably connected to the gas tank 2. A needle 132b is provided at the entrance 136a. When the gas tank 2 is engaged with the gas connecting portion 132, the needle 132b urges a vent valve of the gas tank 2, so that the gas tank 2 introduces the gas to the gas passage 136.

The adjusting member 122 is located in the gas passage 136, wherein an end of the adjusting member 122 has an adjusting portion122a that is in a tapered shape. The adjusting portion122a corresponds to the valve opening 136c. A body of the adjusting member 122 has a threaded section 122b, wherein the threaded section 122b is engaged with the main body 138 of the valve body 13 by a threaded base 123. The threaded section 122b is screwed into the threaded base 123. The knob 124 is located on the other end of the main body 138 of the valve body 13 opposite to the first connecting portion 134 and is coupled to another end of the adjusting member 122. When the knob 124 is turned, the adjusting member 122 could be driven to move along the axial direction of the axial hole 138a, so that the adjusting portion 122a moves relative to the valve opening 136c, i.e., an opening degree of the valve opening 136c is adjusted, thereby adjusting the gas flow passing through the gas passage 136. When the adjusting portion 122a blocks the valve opening 136c, the gas is stopped.

The gas adjusting valve 12 further includes a flow restricting member 126 located in the gas passage 136. The flow restricting member 126 is located between the exit 136b and the adjusting member 122 and is located in the first section 138b of the axial hole 138a. The flow restricting member 126 has a restricting hole 126a. A diameter of the restricting hole 126a is adapted to restrict a maximum gas flow passing through.

The nozzle 14 is disposed on the valve body 13 and is located at the exit 136b. The gas in the gas passage 136 is outputted by the nozzle 14.

The connecting base 16 includes a casing 17. The casing 17 has a first end 172 and a second end 174 that are opposite to each other. The first end 172 has a second connecting portion 173 connected to the first connecting portion 134. The casing 17 has a mixing chamber 176, a through hole 176a, two inlets 176b, and an outlet 176c that respectively communicate with the mixing chamber 176. The through hole 176a is located on the first end 172, wherein the nozzle 14 extends into the mixing chamber 176 through the through hole 176a. The two inlet 176b are located between the first end 172 and the second end 174 and are respectively located on two opposite side of the nozzle 14. The outlet 176c is located on the second end 174 and is adapted to communicate with the burner 30.

In the current embodiment, the second connecting portion 173 has an annular groove 173a and a plurality of notches 173b, wherein the annular groove 173a is located on a hole wall of the through hole 176a. The notches 173b are located on an end portion of the first end 172 and communicate with the annular groove 173a. Each of the positioning members 134a of the first connecting portion 134 of the valve body 13 passes through one of the notches 173b to enter the annular groove 173a to be engaged with the annular groove 173a. After the positioning members 134a respectively passes through one of the notches 173b, the valve body 13 is turned in a direction around the axial direction of the main body 138 of the valve body 13, so that the positioning member 134a could be driven to be stuck by the annular groove 173a; when the valve body 13 is turned in a reversed direction, the positioning member 134a are disengaged with the annular groove 173a; in this way, the first connecting portion 134 is detachably connected to the second connecting portion 173.

More specifically, the casing 17 includes a top casing 177 and a bottom casing 178, wherein the top casing 177 and the bottom casing 178 are connected to each other to be fixed by a fixing screw 179. The top casing 177 has a half annular groove 177a and two half notches 177b on the first end 172. The bottom casing 178 has a half annular groove 178a and two notches 178b on the first end 172. When the top casing 177 and the bottom casing 178 are engaged with each other, the half annular groove 177a of the top casing 177 and the half annular groove 178a of the bottom casing 178 jointly form the annular groove 173a, and the half notches 177b of the top casing 177 and the half notches 178b of the bottom casing 178 jointly form the notches 173b

The top casing 177 has a side opening 177c communicating with an inner portion of the top casing 177. The bottom casing 178 has the two inlets 176b. In an embodiment, the number of the inlet 176b could be one, wherein the inlet 176b is located on the bottom casing 178 and is located on a side of the nozzle 14.

At least one of the top casing 177 and bottom casing 178 has a fixing groove 174a on the second end 174. In the current embodiment, both of the top casing 177 and the bottom casing 178 have a fixing groove 174a. Additionally, both of the top casing 177 and the bottom casing 178 have a half groove 174b, wherein the two half groove 174b are engaged with each other to form the outlet 176c.

Additionally, the connecting base 16 includes a fixing plate 161 connected to the top casing 177 of the casing 17 and extending in a direction toward the burner 30.

The ignition unit 18 is disposed in the casing 17 and includes a high-voltage ignitor 182, an ignition electrode 184, and a button 186. The ignition electrode 184 is electrically connected to the high-voltage ignitor 182. The button 186 is connected to the high-voltage ignitor 182 and is adapted to activate the high-voltage ignitor 182.

In the current embodiment, the high-voltage ignitor 182 is disposed in the inner portion of the top casing 177 and is located in the mixing chamber 176. The ignition unit 18 includes a fixing base 188. The ignition electrode 184 is engaged with the fixing base 188. The fixing base 188 is engaged with the fixing groove 174a. The ignition electrode 184 extends out of the second end 174 of the casing 17 and extends in the direction toward the burner 30. The button 186 passes through the side opening 177c of the top casing 177 to be connected to the high-voltage ignitor 182.

The mixing pipe 20 is a rectangular tube and has two ends, wherein one of the two ends of the mixing pipe 20 is connected to the second end 174 of the casing 17 and is located at the outlet 176c. The mixing pipe 20 is clamped to be fixed by the top casing 177 and the bottom casing 178. The other end of the mixing pipe 20 extends into the burner 30. The burner 30 communicates with the other end of the mixing pipe 20.

The combustion assembly 100 could further include a top cover 3 located above the burner 30. The burner 30 includes a plurality of fixing members 4 connected to the top cover 3. The top cover 3 is connected to the fixing plate 161 of the connecting base 16. In this way, the top cover 3 enhances a structural strength between the connecting base 16 and the burner 30, so that top cover 3, the burner 30, and the connecting base 16 are provided more stably. The top cover 3 could directly cover the top of the oven body 1a. The top cover 3 covers a top of the burner 30 to prevent foreign objects from reaching the burner 30 from the above. In the current embodiment, a bottom of the top cover 3 has a plurality of engaging columns 3a, wherein each of the engaging columns 3a has a threaded section; each of the fixing members 4 has a through hole 4a corresponding to the threaded section of the engaging columns 3a and the fixing plate 161 has a through hole 161a corresponding to the threaded section of the engaging columns 3a; each of the engaging columns 3a passes through either the through hole 4a of one of the fixing members 4 or the through hole 161a of the fixing plate 161, and a plurality of nuts 32 is respectively screwed into one of the engaging columns 3a, so that top cover 3 is connected to the fixing members 4 and the fixing plate 161.

When the present invention is used, the knob 124 is turned to drive the adjusting member 122 to open the valve opening 136c of the gas passage 136, so that the gas of the gas tank 2 passes through the gas passage 136 to be introduced to the mixing chamber 176 of the connecting base 16 by the nozzle 14. When the nozzle 14 sprays out the gas, oxidizing air is simultaneously introduced to the mixing chamber 176 by the two inlets 176b. Then the gas is outputted to the burner 30 by the outlet 176c of the connecting base 16 and the mixing pipe 20 and is outputted by a plurality of flame outlets 31 of the bottom of the burner 30. At the same time, the button 186 located on the connecting base 16 is pressed to activate the high-voltage ignitor 182 to generate a high voltage. The high voltage generated by the high-voltage ignitor 182 generates sparks through the ignition electrode 184 to ignite the gas outputted by the flame outlets 31 to form flames. It is worth mentioning that before the gas enters the burner 30, the gas is mixed with the oxidizing air introduced from the inlet 176b of the connecting base 16, so that the current embodiment could improve the combustion efficiency of the gas compared to the conventional hose connection. Additionally, by the mixing pipe 20 entering the burner 30, a movement pathway of the gas and the oxidizing air is increased to improve the mixing effect, thereby improving the combustion efficiency.

With the aforementioned design, the gas adjusting device 10 that is modularly formed could fix the gas tank 2 relative to the burner 30, supply the gas of the gas tank 2 to the burner 30 without using hose, and improve the combustion efficiency. The combustion assembly 100 of the current embodiment also has modularized structure; when the combustion assembly 100 is disposed on the top of the oven body 1a, the gas tank 2 could be suspended relative to the oven body 1a (shown in FIG. 1) without requiring additional table for placing the gas tank 2, thereby preventing the gas tank 2 from tilting or falling.

## Claims

1. A gas adjusting device (10) adapted to be connected to a burner (30) and a gas tank (2), comprising:
a gas adjusting valve (12) comprising a valve body (13), an adjusting member (122), and a knob (124), wherein the valve body (13) has a gas connecting portion (132) and a first connecting portion (134); the gas connecting portion (132) is adapted to be detachably connected to the gas tank (2); an inner portion of the valve body (13) has a gas passage (136); the gas passage (136) has an entrance (136a) and an exit (136b), wherein the entrance (136a) is formed in the gas connecting portion (132), and the exit (136b) is formed in the first connecting portion (134); the adjusting member (122) is located in the gas passage (136), the knob (124) is connected to the adjusting member (122) and is adapted to drive the adjusting member (122) to adjust a gas flow passing through the gas passage (136);
a nozzle (14) disposed on the valve body (13) and located at the exit (136b);
a connecting base (16) comprising a casing (17), wherein the casing (17) has a first end (172) and a second end (174) that are opposite to each other; the first end (172) has a second connecting portion (173), wherein the second connecting portion (173) is connected to the first connecting portion (134); the casing (17) has a mixing chamber (176), a through hole (176a), at least one inlet (176b), and an outlet (176c) that respectively communicate with the mixing chamber (176), wherein the through hole (176a) is located on the first end (172) and the nozzle (14) extends into the mixing chamber (176) through the through hole (176a); the at least one inlet (176b) is located between the first end (172) and the second end (174) and is located on a side of the nozzle (14); the outlet (176c) is located on the second end (174) and is adapted to communicate with the burner (30); and
an ignition unit (18) disposed in the casing (17) and comprising a high-voltage ignitor (182), an ignition electrode (184), and a button (186), wherein the ignition electrode (184) is electrically connected to the high-voltage ignitor (182); the button (186) is connected to the high-voltage ignitor (182) and is adapted to activate the high-voltage ignitor (182).

2. The gas adjusting device (10) as claimed in claim 1, wherein the first connecting portion (134) and the second connecting portion (173) are detachably connected to each other.

3. The gas adjusting device (10) as claimed in claim 1, wherein the second connecting portion (173) has an annular groove (173a) and a plurality of notches (173b); the annular groove (173a) is located on a hole wall of the through hole (176a); the plurality of notches (173b) are located on an end portion of the first end (172) and communicate with the annular groove (173a); the first connecting portion (134) has a plurality of positioning members (134a), wherein each of the plurality of positioning members (134a) passes through one of the plurality of notches (173b) to enter the annular groove (173a) to be engaged with the annular groove (173a).

4. The gas adjusting device (10) as claimed in claim 1, wherein the at least one inlet (176b) of the casing (17) comprises two inlets (176b); the two inlets (176b) are respectively located on two sides of the nozzle (14).

5. The gas adjusting device (10) as claimed in claim 1, wherein the high-voltage ignitor (182) is located in the mixing chamber (176); the ignition electrode (184) extends out of the second end (174) of the casing (17).

6. The gas adjusting device (10) as claimed in claim 5, wherein the casing (17) comprises a top casing (177) and a bottom casing (178); the high-voltage ignitor (182) is disposed in the top casing (177); the button (186) passes through the top casing (177) and is connected to the high-voltage ignitor (182); the at least one inlet (176b) is located on the bottom casing (178).

7. The gas adjusting device (10) as claimed in claim 6, wherein at least one of the top casing (177) and the bottom casing (178) has a fixing groove (174a) on the second end (174); the ignition unit (18) comprises a fixing base (188); the ignition electrode (184) is engaged with the fixing base (188); the fixing base (188) is engaged with the fixing groove (174a).

8. A combustion assembly (100) adapted to be disposed on a top of an oven body (1a) of an oven (1) and to be connected to a gas tank (2), comprising:
the gas adjusting device (10) as claimed in claim 1 to claim 7;
a mixing pipe (20) having two ends, wherein one of the two ends of the mixing pipe (20) is connected to the second end (174) of the casing (17) and is located at the outlet (176c); and
a burner (30) communicating with the other end of the mixing pipe (20).

9. The combustion assembly (100) as claimed in claim 8, further comprising a top cover (3) located above the burner (30); the burner (30) comprises a plurality of fixing members (4) connected to the top cover (3).

10. The combustion assembly (100) as claimed in claim 9, wherein the connecting base (16) comprises a fixing plate (161) connected to the casing (17) and the top cover (3).
